# EUROPEAN PATENT APPLICATION

(11) **EP 4 235 863 A1**
(43) Date of publication of application: **30.08.2023**
(21) Application number: 21964278.2
(22) Date of filing: 29.12.2021
(51) Int. Cl.: H01M 4/36, H01M 4/525

(54) **SODIUM-ION BATTERY POSITIVE ELECTRODE ACTIVE MATERIAL, METHOD FOR PREPARATION OF SAME, AND POSITIVE ELECTRODE PLATE CONTAINING SAME, AND SODIUM-ION BATTERY, AND ELECTRICAL APPARATUS**

(71) Applicant: Contemporary Amperex Technology Co., Limited, Ningde City, Fujian 352100 (CN)
(72) Inventor: LI, Qiang, Ningde, Fujian 352100 (CN); WANG, Yuhao, Ningde, Fujian 352100 (CN); LIN, Wenguang, Ningde, Fujian 352100 (CN); LIANG, Zibin, Ningde, Fujian 352100 (CN); HE, Shunli, Ningde, Fujian 352100 (CN); HE, Jinhua, Ningde, Fujian 352100 (CN)
(74) Representative: Gong, Jinping
(86) International application number: PCT/CN2021/142493
(87) International publication number: WO 2023/123054

(57) **Abstract**

This application provides a positive active material for use in a sodium-ion battery, a method for preparing same, a positive electrode plate containing same, a sodium-ion battery, and an electrical device. The method for preparing a positive active material for use in a sodium-ion battery includes the following steps: mixing a positive active material for use in a sodium-ion battery with, and causing the positive active material to react with, a washing solution at a temperature of T 1, and filtering and drying a product of the reaction to obtain a washed positive active material for use in a sodium-ion battery, where the washing solution is deionized water or an acidic solution with a pH value lower than 7.0, and 0 °C ≤ T1 < 20 °C. This application can inexpensively and efficiently reduce the content of residual alkali on the surface of the positive active material for use in a sodium-ion battery, without damaging a crystal structure of the positive active material for use in a sodium-ion battery. In this way, the positive active material for use in a sodium-ion battery achieves both a relatively high first-cycle charge capacity per gram and a relatively high first-cycle discharge capacity per gram.

## Description

### TECHNICAL FIELD

This application relates to the technical field of batteries, and in particular, to a positive active material for use in a sodium-ion battery, a method for preparing same, a positive electrode plate containing same, a sodium-ion battery, and an electrical device.

### BACKGROUND

Currently, lithium-ion batteries have taken up a key position in the field of power batteries. Nevertheless, lithium-ion batteries are facing great challenges, for example, increasingly scarce lithium resources, soaring prices of upstream materials, retarded development of recycling technology, and a low recycling rate of old batteries. Sodium-ion batteries can be charged and discharged by virtue of a deintercalation process of sodium ions between a positive electrode and a negative electrode, and the reserves of sodium resources are much more abundant than lithium resources, distributed more widely, and much more cost-effective than lithium resources. Therefore, sodium-ion batteries show great potential to become a new generation of electrochemical system in place of lithium-ion batteries. The positive active material is a key factor to the performance of a sodium-ion battery. As constrained by a preparation process, a relatively high content of residual alkali usually exists on the surface of the positive active material. When the content of the residual alkali is relatively high, the residual alkali severely affects coating performance of a positive slurry and electrochemical performance of the positive electrode plate and the sodium-ion battery. Therefore, effective technical means are needed to reduce the content of the residual alkali on the surface of the positive active material.

### SUMMARY

An objective of this application is to provide a positive active material for use in a sodium-ion battery, a method for preparing same, a positive electrode plate containing same, a sodium-ion battery, and an electrical device. This application can inexpensively and efficiently reduce the content of residual alkali on the surface of the positive active material for use in a sodium-ion battery, without damaging a crystal structure of the positive active material for use in a sodium-ion battery. In this way, the positive active material for use in a sodium-ion battery achieves both a relatively high first-cycle charge capacity per gram and a relatively high first-cycle discharge capacity per gram.

A first aspect of this application provides a method for preparing a positive active material for use in a sodium-ion battery, including the following steps: mixing a positive active material for use in a sodium-ion battery with, and causing the positive active material to react with, a washing solution at a temperature of T1, and filtering and drying a product of the reaction to obtain a washed positive active material for use in a sodium-ion battery, where the washing solution is deionized water or an acidic solution with a pH value lower than 7.0, and 0 °C ≤ T1 < 20 °C.

The inventor hereof surprisingly finds that, after the positive active material for use in a sodium-ion battery is washed at a temperature lower than 20 °C by using deionized water or an acidic solution with a pH value lower than 7.0, the content of residual alkali on the surface of the positive active material for use in a sodium-ion battery is reduced significantly. At the same time, the crystal structure of the positive active material for use in a sodium-ion battery is well maintained, and the capacity performance is enhanced significantly in contrast to an unwashed positive active material. The positive active material for use in a sodium-ion battery, which is prepared by using the method according to this application, achieves both a relatively high first-cycle charge capacity per gram and a relatively high first-cycle discharge capacity per gram. In addition, the preparation method according to this application is simple in process and cost-effective in production, without involving additional equipment.

In any embodiment of this application, 2 °C ≤ T1 ≤ 15 °C. Optionally, 5 °C ≤ T1 ≤ 10 °C. When the positive active material is washed at a temperature falling within the specified range, a dissolution speed of sodium ions in a crystal structure of the positive active material for use in a sodium-ion battery can be reduced, and the damage caused by the washing process to the crystal structure of the positive active material for use in a sodium-ion battery is minimized. In this way, the resultant positive active material for use in a sodium-ion battery achieves both a relatively high first-cycle charge capacity per gram and a relatively high first-cycle discharge capacity per gram.

In any embodiment of this application, the pH value of the acidic solution satisfies 4.0 ≤ pH < 7.0. Optionally, 5.0 ≤ pH ≤ 6.5. An appropriate pH range enables fast removal of the residual alkali from the surface of the positive active material for use in a sodium-ion battery in a short time, and minimizes the damage caused by the washing process to the crystal structure of the positive active material for use in a sodium-ion battery. In this way, the resultant positive active material for use in a sodium-ion battery achieves both a relatively high first-cycle charge capacity per gram and a relatively high first-cycle discharge capacity per gram.

In any embodiment of this application, the acidic solution includes water and a solute.

Optionally, the solute includes at least one of boric acid, acetic acid, metasilicic acid, alpha hydroxy acid, phosphoric acid, diammonium hydrogen phosphate, disodium hydrogen phosphate, sodium hydrogen sulfate, or ammonium chloride. Such solutes contain appropriate anions, and can react with Na⁺ to form a soluble sodium salt, so that the residue is easily removable by filtering. In addition, such solutes can react with Na⁺ to form a sodium salt that is of relatively high thermal stability. In this way, the sodium salt that remains on the surface of the resultant positive active material for use in a sodium-ion battery after completion of the drying can function as a coating layer to some extent, reduce surface side reactions, and improve structural stability and thermal stability of the material.

In any embodiment of this application, a drying temperature is 90 °C to 200 °C, and optionally 120 °C to 180 °C.

In any embodiment of this application, a drying time is 4 h to 24 h, and optionally 10 h to 18 h.

If the drying temperature is too low or the drying time is too short, residual moisture on the surface of the resultant positive active material for use in a sodium-ion battery evaporates slowly or exists persistently, and therefore, impairs electrochemical performance of the resultant positive active material for use in a sodium-ion battery and the sodium-ion battery prepared from the positive active material. If the drying temperature is excessively high or the drying time is excessively long, the energy consumption increases.

In any embodiment of this application, the positive active material for use in a sodium-ion battery and the washing solution are mixed and react in a stirring state.

In any embodiment of this application, a stirring speed is 100 rpm to 1000 rpm, and optionally 300 rpm to 500 rpm.

In any embodiment of this application, the stirring time is 0.5 min to 30 min, and optionally 1 min to 5 min.

The stirring speed and stirring time primarily affect diffusion and a reaction speed of the solute. When the stirring speed is excessively slow or the stirring time is excessively short, an ideal washing effect is hardly achievable. In addition, a slow stirring speed increases the energy consumption. When the stirring speed is excessively high, the diffusion speed of the solute increases, but the damage to the crystal structure of the positive active material for use in a sodium-ion battery may also increase, resulting in dissolution of a relatively large amount of sodium ions. In this way, the resultant positive active material for use in a sodium-ion battery fails to achieve both a relatively high first-cycle charge capacity per gram and a relatively high first-cycle discharge capacity per gram.

In any embodiment of this application, the positive active material for use in a sodium-ion battery is a layered transition metal oxide.

Optionally, a molecular formula of the layered transition metal oxide is NaₓM1_{y}M2_{1-y}O_{2-δ}Q_{z}, where M1 is at least one selected from Ni, Mn, Fe, Co, or Cu, M2 is at least one selected from Li, Mg, Al, Si, K, Ca, Sc, Ti, V, Cr, Zn, Sr, Y, Zr, Nb, Mo, Bi, or La, Q is at least one selected from F, Cl, or N, 0 < x ≤ 1, 0 < y ≤ 1, 0 ≤ z ≤ 0.3, and 0 ≤ δ ≤ 0.3.

A second aspect of this application provides a positive active material for use in a sodium-ion battery. The positive active material is prepared by using the method according to the first aspect of this application, and achieves relatively high degree of order of the crystal structure, a relatively low content of residual alkali on the surface, a relatively high first-cycle charge capacity per gram, and a relatively high first-cycle discharge capacity per gram.

A third aspect of this application provides a positive electrode plate. The positive electrode plate includes the positive active material for use in a sodium-ion battery according to the second aspect of this application.

A fourth aspect of this application provides a sodium-ion battery. The sodium-ion battery includes the positive electrode plate according to the third aspect of this application.

A fifth aspect of this application provides an electrical device. The electrical device includes at least one of the sodium-ion battery according to the fourth aspect of this application, or a battery module or a battery pack assembled by using the sodium-ion battery according to the fourth aspect of this application. The sodium-ion battery, the battery module, or the battery pack is used as a power supply or an energy storage unit of the electrical device.

### BRIEF DESCRIPTION OF DRAWINGS

To describe the technical solutions of the embodiments of this application more clearly, the following outlines the drawings to be used in the embodiments of this application. Evidently, the drawings outlined below are merely a part of embodiments of this application. A person of ordinary skill in the art may derive other drawings from such drawings without making any creative efforts.
FIG. 1 is a schematic diagram of a sodium-ion battery according to an embodiment of this application;
FIG. 2 is a schematic exploded view of an embodiment of the sodium-ion battery shown in FIG. 1;
FIG. 3 is a schematic diagram of a battery module according to an embodiment of this application;
FIG. 4 is a schematic diagram of a battery pack according to an embodiment of this application;
FIG. 5 is a schematic exploded view of an embodiment of the battery pack shown in FIG. 4;
FIG. 6 is a schematic diagram of an embodiment of an electrical device that contains a sodium-ion battery of this application as a power supply;
FIG. 7 is a scanning electron microscope (SEM) image of a layered transition metal oxide prepared in Comparative Embodiments 1 to 3 and Embodiment 1;
FIG. 8 is an X-ray diffraction (XRD) pattern of a layered transition metal oxide prepared in Comparative Embodiments 1 to 3 and Embodiment 1, where I represents Comparative Embodiment 1, II represents Embodiment 1, III represents Comparative Embodiment 2, and IV represents Comparative Embodiment 3; and
FIG. 9 is a charge-discharge curve of a layered transition metal oxide prepared in Comparative Embodiments 1 to 3 and Embodiment 1, where I represents Comparative Embodiment 1, II represents Embodiment 1, III represents Comparative Embodiment 2, and IV represents Comparative Embodiment 3.

The drawings are not necessarily drawn to scale.

### DETAILED DESCRIPTION OF EMBODIMENTS

The following describes and discloses in detail a positive active material for use in a sodium-ion battery, a method for preparing same, a positive electrode plate containing same, a sodium-ion battery, and an electrical device according to this application with due reference to drawings. However, unnecessary details may be omitted in some cases. For example, a detailed description of a well-known matter or repeated description of an essentially identical structure may be omitted. That is intended to prevent the following descriptions from becoming unnecessarily lengthy, and to facilitate understanding by a person skilled in the art. In addition, the drawings and the following descriptions are intended for a person skilled in the art to thoroughly understand this application, but not intended to limit the subject-matter set forth in the claims.

A "range" disclosed herein is defined in the form of a lower limit and an upper limit. A given range is defined by a lower limit and an upper limit selected. The selected lower and upper limits define the boundaries of a particular range. A range so defined may be inclusive or exclusive of the end values, and a lower limit of one range may be arbitrarily combined with an upper limit of another range to form a range. For example, if a given parameter falls within a range of 60 to 120 and a range of 80 to 110, it is expectable that the parameter may fall within a range of 60 to 110 and a range of 80 to 120 as well. In addition, if lower-limit values 1 and 2 are listed, and if upper-limit values 3, 4, and 5 are listed, the following ranges are all expectable: 1 to 3, 1 to 4, 1 to 5, 2 to 3, 2 to 4, and 2 to 5. Unless otherwise specified herein, a numerical range "a to b" is a brief representation of a combination of any real numbers between a and b inclusive, where both a and b are real numbers. For example, a numerical range "0 to 5" herein means all real numbers recited between 0 and 5 inclusive, and the expression "0 to 5" is just a brief representation of a combination of such numbers. In addition, a statement that a parameter is an integer greater than or equal to 2 is equivalent to a disclosure that the parameter is an integer such as 2, 3, 4, 5, 6, 7, 8, 9, 10, 11, 12, and so on.

Unless otherwise expressly specified herein, all embodiments and optional embodiments hereof may be combined with each other to form a new technical solution considered to be included in the content disclosed in this application.

Unless otherwise expressly specified herein, all technical features and optional technical features hereof may be combined with each other to form a new technical solution considered to be included in the content disclosed in this application.

Unless otherwise expressly specified herein, all steps described herein may be performed in sequence or at random, and preferably in sequence. For example, that the method includes steps (a) and (b) indicates that the method may include steps (a) and (b) performed in sequence, or steps (b) and (a) performed in sequence. For example, that the method may further include step (c) indicates that step (c) may be added into the method in any order. For example, the method may include steps (a), (b), and (c), or may include steps (a), (c), and (b), or may include steps (c), (a), and (b), and so on.

Unless otherwise expressly specified herein, "include" and "comprise" mentioned herein mean open-ended inclusion, or closed-ended inclusion. For example, the terms "include" and "comprise" may mean inclusion of other items that are not recited, or inclusion of only the items recited.

Unless otherwise expressly specified herein, the term "or" is inclusive. For example, the expression "A or B" means "A alone, B alone, or both A and B". More specifically, any one of the following conditions satisfies the condition "A or B" : A is true (or existent) and B is false (or absent); A is false (or absent) and B is true (or existent); and, both A and B are true (or existent).

In a process of preparing a positive active material for use in a sodium-ion battery, a high-temperature sintering (at a sintering temperature usually higher than 400 °C) process is usually necessary. In the preparation process, in order to improve the yield rate of the product and make up for volatilization of Na during high-temperature sintering, the amount of a sodium source added is usually excessive. Consequently, after completion of the high-temperature sintering process, a part of the sodium source remains on the surface of the positive active material for use in a sodium-ion battery, and reacts with moisture and CO₂ in the air to form residual alkalis such as NaOH and Na₂CO₃. The residual alkali makes it easy for a positive slurry to gel or solidify, and impairs the coating performance of the positive slurry and the electrochemical performance of the positive electrode plate and the sodium-ion battery. Thermal stability of the residual alkali such as Na₂CO₃ is poor, and such residual alkali is prone to decompose under a high pressure to generate a gas, thereby impairing the electrochemical performance of the sodium-ion battery. The residual alkali lacks electrochemical activity, and obstructs transfer of sodium ions when the content of the residual alkali is excessively high, thereby impairing the electrochemical performance of the sodium-ion battery. In addition, after completion of the high-temperature sintering process, the residual alkalis such as NaOH and Na₂CO₃ are inevitably formed on the surface of the positive active material for use in a sodium-ion battery. Without being removed, the residual alkalis keep reacting with moisture and CO₂ in the air, thereby further obstructing the transfer of sodium ions, and even leads to deintercalation of a part of sodium from the crystal structure of the positive active material for use in a sodium-ion battery, thereby severely impairing the capacity of the positive active material for use in a sodium-ion battery, especially the first-cycle specific charge capacity and the first-cycle specific discharge capacity. Therefore, the content of the residual alkali on the surface of the positive active material for use in a sodium-ion battery needs to be reduced by an effective technical means after completion of the high-temperature sintering process.

Water washing is currently the main means to reduce the content of the residual alkali on the surface of the positive active material for use in a sodium-ion battery. In a lithium-ion battery, the content of residual alkalis such as LiOH and Li₂CO₃ on the surface of the positive active material (such as a ternary material) can be reduced significantly by washing the positive active material, and the washing effect is good. In addition, the washing process does not adversely affect the crystal structure or capacity performance of the ternary material. However, a positive active material for use in a sodium-ion battery is extremely sensitive to moisture, and Na is extremely prone to be deintercalated from the crystal structure of the positive active material after being exposed to moisture, thereby leads to a decrease in the capacity of the positive active material, especially a significant decrease in the first-cycle specific charge capacity. Washing the material with a non-aqueous organic solvent can also reduce the content of the residual alkali on the surface of the positive active material for use in a sodium-ion battery, but a good washing effect is hardly achievable, and the washing is costly.

Therefore, a method is urgently needed to reduce the content of the residual alkali on the surface of the positive active material for use in a sodium-ion battery, without damaging the crystal structure of the positive active material for use in a sodium-ion battery.

### Method for preparing a positive active material for use in a sodium-ion battery

A first aspect of this application provides a method for preparing a positive active material for use in a sodium-ion battery, including the following steps: mixing a positive active material for use in a sodium-ion battery with, and causing the positive active material to react with, a washing solution at a temperature of T 1, and filtering and drying a product of the reaction to obtain a washed positive active material for use in a sodium-ion battery, where the washing solution is deionized water or an acidic solution with a pH value lower than 7.0, and 0 °C ≤ T1 < 20 °C.

The inventor hereof surprisingly finds that, after the positive active material for use in a sodium-ion battery is washed at a temperature lower than 20 °C by using deionized water or an acidic solution with a pH value lower than 7.0, the content of residual alkali on the surface of the positive active material for use in a sodium-ion battery is reduced significantly. At the same time, the crystal structure of the positive active material for use in a sodium-ion battery is well maintained, and the capacity performance is enhanced significantly in contrast to an unwashed positive active material. The positive active material for use in a sodium-ion battery, which is prepared by using the method according to this application, achieves both a relatively high first-cycle charge capacity per gram and a relatively high first-cycle discharge capacity per gram. In addition, the preparation method according to this application is simple in process and cost-effective in production, without involving additional equipment.

The existing deionized water washing process primarily washes the material by using the high solubility of NaOH and Na₂CO₃ in the deionized water. Generally, the higher the temperature, the higher the solubility of the residual alkalis such as NaOH and Na₂CO₃, and the more easily the residual alkalis can be removed quickly in a short time. However, during research, the inventor unexpectedly finds that the washing temperature severely affects the effect of washing the positive active material for use in a sodium-ion battery. After the positive active material for use in a sodium-ion battery is washed at a room temperature (20 °C to 25 °C) or in a heated environment, the crystal structure of the positive active material is severely damaged, and the capacity of the positive active material is significantly lower in contrast to an unwashed positive active material. Therefore, the technical solution of this application chooses to wash the positive active material for use in a sodium-ion battery in a low-temperature environment of less than 20 °C, thereby achieving a good washing effect, maximally suppressing the dissolution of sodium ions from the crystal structure of the positive active material for use in a sodium-ion battery, and reducing the damage caused by the washing process to the crystal structure.

When the washing solution is an acidic solution with a pH value lower than 7.0, there are two main chemical reactions between the acidic solution and the residual alkali during the washing: 2HA + Na₂CO₃ = 2NaA + H2COs and HA + NaOH = NaA + H₂O, where A represents an acid ligand. The acidic solution can be ionized to generate H⁺ and acid ligand anion A⁻, where H⁺ can react with the residual alkali to generate water and carbon dioxide. The acid ligand anion A⁻ can react with Na⁺ to generate a stable and soluble sodium salt. In this case, the washing is primarily based on an acid-base neutralization reaction principle. Therefore, when the washing solution is an acidic solution with a pH value lower than 7.0, the washing solution can remove the residual alkali quickly from the surface of the positive active material for use in a sodium-ion battery in a short time, thereby minimizing the damage caused by the washing process to the crystal structure of the positive active material for use in a sodium-ion battery. After completion of the washing process, solid ingredients can be separated from liquid ingredients by filtering. Most of the sodium salt generated by the reaction between the acid ligand anion A⁻ and Na⁺ is dissolved in the liquid ingredients, and therefore, can be easily removed by filtering. A small part of the sodium salt remains on the surface of the resultant positive active material for use in a sodium-ion battery after completion of the drying process, and can function as a coating layer to some extent to reduce surface side reactions and enhance structural stability and thermal stability of the material.

In some embodiments, unwashed positive active material for use in a sodium-ion battery means the positive active material obtained after a high-temperature sintering (at a sintering temperature usually higher than 400 °C) process. Definitely, the preparation method according to this application is also applicable to products obtained through other washing processes in advance.

In some embodiments, the positive active material for use in a sodium-ion battery is a layered transition metal oxide. Compared with other types of positive active materials for use in a sodium-ion battery, such as phosphates, pyrophosphates, metal-organic frameworks/metal hexacyanides, the layered transition metal oxide is more sensitive to moisture. Therefore, when prepared by using the method according to this application, the layered transition metal oxide can be washed more effectively, the content of the residual alkali on the surface is reduced significantly, the crystal structure is well maintained, and the capacity performance is enhanced significantly in contrast to the unwashed material.

In some embodiments, a molecular formula of the layered transition metal oxide is NaₓM1_{y}M2_{1-y}O_{2-δ}Q_{z}, where M1 is at least one selected from Ni, Mn, Fe, Co, or Cu, M2 is at least one selected from Li, Mg, Al, Si, K, Ca, Sc, Ti, V, Cr, Zn, Sr, Y, Zr, Nb, Mo, Bi, or La, Q is at least one selected from F, Cl, or N, 0 < x ≤ 1, 0 < y ≤ 1, 0 ≤ z ≤ 0.3, and 0 ≤ δ ≤ 0.3. M1 represents a 3d transition metal element, and M2 represents a doping element. M2 may be added as a dopant at a Na site or a transition metal site (that is, an M1 site).

The layered transition metal oxide may be a one-element material or a multi-element material. "One-element material" means that the transition metal M1 is one element selected from Ni, Mn, Fe, Co, and Cu; and "multi-element material" means that the transition metal M1 is at least two selected from Ni, Mn, Fe, Co, and Cu. For example, the transition metal M1 represents a combination of Mn and Fe, a combination of Ni, Mn, and Fe, a combination of Mn, Fe, and Cu, and the like.

Optionally, the layered transition metal oxide takes on an O3-phase structure, a P2-phase structure, or an O3/P2-hybrid-phase structure. Definitely, the layered transition metal oxide may take on other structures instead, such as a P3-phase structure.

The layered transition metal oxide is extremely sensitive to moisture. In a conventional deionized water washing process, sodium ions are prone to be deintercalation caused by sodium-hydrogen exchange and moisture permeation into the crystal structure of the material. Therefore, the layered transition metal oxide obtained by a conventional deionized water washing process can hardly achieve both a relatively high first-cycle charge capacity per gram and a relatively high first-cycle discharge capacity per gram. In addition, a crystal plane of the layered transition metal oxide may slip after the sodium ions are deintercalated, resulting in a major change in the X-ray diffraction pattern. A possible reason is that the layered transition metal oxide is formed by alternately stacking a TMO6 (TM represents a transition metal) octahedral layer and a sodium ion layer, with edges being shared between the two layers. After the sodium ions are deintercalated, a repulsive force between the transition metal layers increases, and therefore, the interlayer spacing becomes larger. For example, the (003) characteristic peak in the X-ray diffraction pattern of the O3-phase layered transition metal oxide tends to be offset toward a low angle. The deintercalation of sodium ions and the slip of the crystal plane also lead to aggregation of transition metal elements. For example, in the X-ray diffraction pattern of the O3-phase layered transition metal oxide, the (012) characteristic peak and the (015) characteristic peak are intensified, and the (104) characteristic peak is weakened. The crystal structure of the positive active material for use in a sodium-ion battery, which is obtained by using the washing process in the preparation method according to this application, is almost changeless, and the intensity, position, and the like of each characteristic peak in the X-ray diffraction pattern are almost changeless. Taking the O3-phase layered transition metal oxide as an example, in the X-ray diffraction pattern of the washed material, a ratio of the intensity of the (101) characteristic peak to the intensity of the (012) characteristic peak, denoted by I(₁₀₁)/I(₀₁₂), is greater than or equal to 1, and a ratio of the intensity of the (104) characteristic peak to the intensity of the (015) characteristic peak, denoted by I₍₁₀₄₎/I₍₀₁₅₎, is greater than or equal to 10. In addition, in contrast to the X-ray diffraction pattern of the unwashed material, the (003) characteristic peak is offset toward a low angle by an amount ∇(003) that is less than or equal to 0.2°.

In the technical solution of this application, the washing temperature (or reaction temperature) T1 is less than 20 °C and greater than or equal to 0 °C. For example, the washing temperature T1 may be 0 °C, 1 °C, 2 °C, 3 °C, 4 °C, 5 °C, 6 °C, 7 °C, 8 °C, 9 °C, 10 °C, 11 °C, 12 °C, 13 °C, 14 °C, 15 °C, 16 °C, 17 °C, 18 °C, 19 °C, or a value falling within a range formed by any two thereof. When the positive active material is washed at a temperature falling within the specified range, a dissolution speed of sodium ions in a crystal structure of the positive active material for use in a sodium-ion battery can be reduced, and the damage caused by the washing process to the crystal structure of the positive active material for use in a sodium-ion battery is minimized. In this way, the resultant positive active material for use in a sodium-ion battery achieves both a relatively high first-cycle charge capacity per gram and a relatively high first-cycle discharge capacity per gram. During research, the inventor also finds that the washing effect varies little under a low-temperature environment. Considering that a relatively low washing temperature increases the energy consumption but without significantly improving the washing effect, the washing temperature T1 needs to avoid being excessively low. Optionally, 1 °C ≤ T1 ≤ 18 °C, 1 °C ≤ T1 ≤ 15°C, 1 °C ≤ T1 ≤ 12 °C, 1 °C ≤ T1 ≤ 10 °C, 2 °C ≤ T1 ≤ 18 °C, 2 ≤ T1 ≤ 15 °C, 2 °C ≤ T1 ≤ 12 °C, 2 °C ≤ T1 ≤ 10 °C, 3 °C ≤ T1 ≤ 18 °C, 3 °C ≤ T1 ≤ 15 °C, 3 °C ≤ T1 ≤ 12 °C, 3 °C ≤ T1 ≤ 10 °C, 4 °C ≤ T1 ≤ 18 °C, 4 °C ≤ T1 ≤ 15 °C, 4 °C ≤ T1 ≤ 12 °C, 4 °C ≤ T1 ≤ 10 °C, 5 °C ≤ T1 ≤ 18 °C, 5 °C ≤ T1 ≤ 15 °C, 5 °C ≤ T1 ≤ 12 °C, or 5 °C ≤ T1 ≤ 10 °C.

In theory, the higher the acidity of the washing solution, the more effectively the residual alkali is removed. However, when the acidity of the washing solution is excessively high, a large amount of H⁺ ions generated by ionization not only react with the residual alkali, but also react with the material to corrode the material and severely damage the crystal structure of the material, thereby leading to a significant decline in the capacity performance, rate performance, and the like of the positive active material for use in a sodium-ion battery. Considering the stability of the crystal structure of the positive active material for use in a sodium-ion battery and the capacity performance, the pH value of the acidic solution may satisfy 4.0 ≤ pH < 7.0. In some embodiments, optionally, 4.2 ≤ pH < 7.0, 4.5 ≤ pH < 7.0, 4.8 ≤ pH < 7.0, 5.0 ≤ pH < 7.0, 5.2 ≤ pH < 7.0, or 5.5 ≤ pH < 7.0.

The acidity of the washing solution is relatively weak, that is, when the washing solution is almost neutral, the washing solution is unable to quickly remove the residual alkali on the surface of the positive active material for use in a sodium-ion battery in a short time, and the washing process takes a long time. In some embodiments, optionally, 4.0 ≤ pH ≤ 6.5, 4.2 ≤ pH ≤ 6.5, 4.5 ≤ pH ≤ 6.5, 4.8 ≤ pH ≤ 6.5, 5.0 ≤ pH ≤ 6.5, 5.2 < pH ≤ 6.5, or 5.5 ≤ pH ≤ 6.5. An appropriate pH range enables fast removal of the residual alkali from the surface of the positive active material for use in a sodium-ion battery in a short time, and minimizes the damage caused by the washing process to the crystal structure of the positive active material for use in a sodium-ion battery. In this way, the resultant positive active material for use in a sodium-ion battery achieves both a relatively high first-cycle charge capacity per gram and a relatively high first-cycle discharge capacity per gram.

In some embodiments, the acidic solution includes water and a solute. The solute and water can be properly combined to obtain an acidic solution with a pH satisfying the above range. As an example, the solute may include, but without being limited to, at least one of boric acid, acetic acid, metasilicic acid, alpha hydroxy acid, phosphoric acid, diammonium hydrogen phosphate, disodium hydrogen phosphate, sodium hydrogen sulfate, or ammonium chloride. Such solutes contain appropriate anions, and can react with Na⁺ to form a soluble sodium salt, so that the residue is easily removable by filtering. In addition, such solutes can react with Na⁺ to form a sodium salt that is of relatively high thermal stability. In this way, the sodium salt that remains on the surface of the resultant positive active material for use in a sodium-ion battery after completion of the drying can function as a coating layer to some extent, reduce surface side reactions, and improve structural stability and thermal stability of the material.

The drying process is necessary to the obtaining of the positive active material for use in a sodium-ion battery, and the drying temperature and drying time primarily affect the evaporation speed of the residual moisture on the surface. If the drying temperature is too low or the drying time is too short, residual moisture on the surface of the resultant positive active material for use in a sodium-ion battery evaporates slowly or exists persistently, and therefore, impairs electrochemical performance of the resultant positive active material for use in a sodium-ion battery and the sodium-ion battery prepared from the positive active material. If the drying temperature is excessively high or the drying time is excessively long, the energy consumption increases.

In some embodiments, the drying temperature is 80 °C, 90 °C, 100 °C, 110 °C, 120 °C, 130 °C, 140 °C, 150 °C, 160 °C, 170 °C, 180 °C, 190 °C, 200 °C, or a value falling within a range formed by any two thereof. Optionally, the drying temperature is 80 °C to 200 °C; and further optionally, the drying temperature is 90 °C to 200 °C; and still further optionally, the drying temperature is 120 °C to 180 °C.

In some embodiments, the drying time is 4 h, 5 h, 6 h, 7 h, 8 h, 9 h, 10 h, 11 h, 12 h, 13 h, 14 h, 15 h, 16 h, 17 h, 18 h, 19 h, 20 h, 21 h, 22 h, 23 h, 24h, or a value falling within a range formed by any two thereof. Optionally, the drying time is 4 h to 24 h; further optionally, the drying time is 5 h to 24 h; and still further optionally, the drying time is 10 h to 18 h. A person skilled in the art may select an appropriate drying time within the above ranges according to the drying temperature adopted. For example, when the drying temperature is relatively high, the drying time may be shortened as appropriate.

In some embodiments, the positive active material for use in a sodium-ion battery and the washing solution are mixed and react in a stirring state. The stirring speed and stirring time primarily affect diffusion and a reaction speed of the solute. When the stirring speed is excessively slow or the stirring time is excessively short, an ideal washing effect is hardly achievable. In addition, a slow stirring speed increases the energy consumption. When the stirring speed is excessively high, the diffusion speed of the solute increases, but the damage to the crystal structure of the positive active material for use in a sodium-ion battery may also increase, resulting in dissolution of a relatively large amount of sodium ions. In this way, the resultant positive active material for use in a sodium-ion battery fails to achieve both a relatively high first-cycle charge capacity per gram and a relatively high first-cycle discharge capacity per gram. Therefore, the stirring speed needs to be neither excessively high nor excessively low in order to remove the residual alkali quickly from the surface of the positive active material for use in a sodium-ion battery in a short time, minimize the damage caused by the washing process to the crystal structure of the positive active material for use in a sodium-ion battery, and achieve both a relatively high first-cycle charge capacity per gram and a relatively high first-cycle discharge capacity per gram of the resultant positive active material for use in a sodium-ion battery.

In some embodiments, the stirring speed is 100 rpm, 200 rpm, 300 rpm, 400 rpm, 500 rpm, 600 rpm, 700 rpm, 800 rpm, 900 rpm, 1000 rpm, or a value falling within a range formed by any two thereof. Optionally, the stirring speed is 100 rpm to 1000 rpm. Further optionally, the stirring speed is 300 rpm to 500 rpm.

In some embodiments, the stirring time (or reaction time) is 0.5 min, 1 min, 2 min, 3 min, 4 min, 5 min, 6 min, 7 min, 8 min, 9 min, 10 min, 15 min, 20 min, 25 min, 30 min, or a value falling within a range formed by any two thereof. Optionally, the stirring time is 0.5 min to 30 min. Further optionally, the stirring time is 1 min to 10 min. Still further optionally, the stirring time is 1 min to 5 min. A person skilled in the art may select an appropriate stirring time within the above ranges according to the stirring speed adopted. For example, when the stirring speed is relatively high, the stirring time may be shortened as appropriate.

In some embodiments, the method for preparing a positive active material for use in a sodium-ion battery includes the following steps: mixing a positive active material for use in a sodium-ion battery with, and causing the positive active material to react with, deionized water at a temperature of T1, and filtering and drying a product of the reaction to obtain a washed positive active material for use in a sodium-ion battery, where 2 °C ≤ T1 ≤ 15 °C, and optionally, 5 °C ≤ T1 ≤ 10 °C. After the positive active material for use in a sodium-ion battery is washed at a temperature lower than 20 °C by using deionized water, the content of residual alkali on the surface of the positive active material for use in a sodium-ion battery is reduced significantly by selecting an appropriate washing temperature. At the same time, the crystal structure of the positive active material for use in a sodium-ion battery is well maintained, and the capacity performance is enhanced significantly in contrast to an unwashed positive active material. The positive active material for use in a sodium-ion battery, which is prepared by using the method according to this application, achieves both a relatively high first-cycle charge capacity per gram and a relatively high first-cycle discharge capacity per gram.

In some embodiments, the method for preparing a positive active material for use in a sodium-ion battery includes the following steps: mixing a positive active material for use in a sodium-ion battery with, and causing the positive active material to react with, a deionized water at a temperature of T1, and filtering and drying a product of the reaction to obtain a washed positive active material for use in a sodium-ion battery, where 2 °C ≤ T1 ≤ 15 °C, and optionally 5 °C ≤ T1 ≤ 10 °C; the drying temperature is 90 °C to 200 °C, and optionally 120 °C to 180 °C; and drying time is 4 h to 24 h, and optionally 10 h to 18 h. After the positive active material for use in a sodium-ion battery is washed at a temperature lower than 20 °C by using deionized water, the content of residual alkali on the surface of the positive active material for use in a sodium-ion battery is reduced significantly by appropriately selecting a washing temperature, a drying temperature, and a drying time. At the same time, the crystal structure of the positive active material for use in a sodium-ion battery is well maintained, and the capacity performance is enhanced significantly in contrast to an unwashed positive active material. The positive active material for use in a sodium-ion battery, which is prepared by using the method according to this application, achieves both a relatively high first-cycle charge capacity per gram and a relatively high first-cycle discharge capacity per gram.

In some embodiments, the method for preparing a positive active material for use in a sodium-ion battery includes the following steps: mixing a positive active material for use in a sodium-ion battery with, and causing the positive active material to react with, an acidic solution at a temperature of T1, and filtering and drying a product of the reaction to obtain a washed positive active material for use in a sodium-ion battery, where 2 °C ≤ T1 ≤ 15 °C, and optionally, 5 °C ≤ T1 ≤ 10 °C. The pH value of the acidic solution satisfies 5.0 ≤ pH ≤ 6.5, and optionally, 5.5 ≤ pH ≤ 6.5. The acidic solution includes water and a solute, and the solute includes at least one of boric acid, acetic acid, metasilicic acid, alpha hydroxy acid, phosphoric acid, diammonium hydrogen phosphate, disodium hydrogen phosphate, sodium hydrogen sulfate, or ammonium chloride. After the positive active material for use in a sodium-ion battery is washed at a temperature lower than 20 °C by using an acidic solution, the content of residual alkali on the surface of the positive active material for use in a sodium-ion battery is reduced significantly by appropriate selecting a washing temperature, a solute type, and a pH value. At the same time, the crystal structure of the positive active material for use in a sodium-ion battery is well maintained, and the capacity performance is enhanced significantly in contrast to an unwashed positive active material. The positive active material for use in a sodium-ion battery, which is prepared by using the method according to this application, achieves both a relatively high first-cycle charge capacity per gram and a relatively high first-cycle discharge capacity per gram.

In some embodiments, the method for preparing a positive active material for use in a sodium-ion battery includes the following steps: mixing a positive active material for use in a sodium-ion battery with, and causing the positive active material to react with, an acidic solution at a temperature of T1, and filtering and drying a product of the reaction to obtain a washed positive active material for use in a sodium-ion battery, where 2 °C ≤ T1 ≤ 15 °C, and optionally, 5 °C ≤ T1 ≤ 10 °C. The pH value of the acidic solution satisfies 5.0 ≤ pH ≤ 6.5, and optionally, 5.5 ≤ pH ≤ 6.5. The acidic solution includes water and a solute, and the solute includes at least one of boric acid, acetic acid, metasilicic acid, alpha hydroxy acid, phosphoric acid, diammonium hydrogen phosphate, disodium hydrogen phosphate, sodium hydrogen sulfate, or ammonium chloride. The drying temperature is 90 °C to 200 °C, and optionally 120 °C to 180 °C; and drying time is 4 h to 24 h, and optionally 10 h to 18 h. After the positive active material for use in a sodium-ion battery is washed at a temperature lower than 20 °C by using an acidic solution, the content of residual alkali on the surface of the positive active material for use in a sodium-ion battery is reduced significantly by appropriately selecting a washing temperature, a drying temperature, a drying time, a solute type, and a pH value. At the same time, the crystal structure of the positive active material for use in a sodium-ion battery is well maintained, and the capacity performance is enhanced significantly in contrast to an unwashed positive active material. The positive active material for use in a sodium-ion battery, which is prepared by using the method according to this application, achieves both a relatively high first-cycle charge capacity per gram and a relatively high first-cycle discharge capacity per gram.

### Positive active material for use in a sodium-ion battery

A second aspect of this application provides a positive active material for use in a sodium-ion battery. The positive active material is prepared by using the method according to any embodiment of the first aspect of this application.

The positive active material for use in a sodium-ion battery according to this application achieves relatively high degree of order of the crystal structure, a relatively low content of residual alkali on the surface, a relatively high first-cycle charge capacity per gram, and a relatively high first-cycle discharge capacity per gram. Therefore, a sodium-ion battery that adopts the positive active material achieves significantly improved electrochemical performance.

### Positive electrode plate

A third aspect of this application provides a positive electrode plate. The positive electrode plate includes the positive active material for use in a sodium-ion battery according to the second aspect of this application.

In some embodiments, the positive electrode plate includes a positive current collector and a positive film layer disposed on at least one surface of the positive current collector and containing a positive active material. For example, the positive current collector includes two surfaces opposite to each other in a thickness direction of the positive current collector. The positive film layer is disposed on either or both of the two opposite surfaces of the positive current collector.

The positive active material includes the positive active material for use in a sodium-ion battery according to the second aspect of this application, but the positive active material adopted in the positive electrode plate of this application does not exclude other positive active materials different from the foregoing positive active material for use in a sodium-ion battery. For example, the other positive active materials may be a positive active material well-known in the art for use in a sodium-ion battery, including but not limited to fluorides, sulfides, phosphates, pyrophosphates, metal-organic frameworks/metal hexacyanides, organic compounds, and the like. One of such other positive active materials may be used alone, or at least two thereof may be used in combination.

In some embodiments, the positive film layer further optionally includes a positive conductive agent. The type of the positive conductive agent is not particularly limited in this application. As an example, the positive conductive agent includes at least one of superconductive carbon, conductive graphite, acetylene black, carbon black, Ketjen black, carbon dots, carbon nanotubes, graphene, or carbon nanofibers.

In some embodiments, the positive film layer further optionally includes a positive binder. The type of the positive binder is not particularly limited in this application. As an example, the positive binder may include at least one of polyvinylidene difluoride (PVDF), polytetrafluoroethylene (PTFE), poly(vinylidene fluoride-co-tetrafluoroethylene-co-propylene), poly(vinylidene fluoride-co-hexafluoropropylene-co-tetrafluoroethylene), poly(tetrafluoroethylene-co-hexafluoropropylene), fluorinated acrylic resin, styrene-butadiene rubber (SBR), water-soluble unsaturated resin SR-1B, aqueous acrylic resin (such as polyacrylic acid PAA, polymethacrylic acid PMAA, or polyacrylic acid sodium PAAS), polyacrylamide (PAM), polyvinyl alcohol (PVA), sodium alginate (SA), or carboxymethyl chitosan (CMCS).

In some embodiments, the positive current collector may be a metal foil or a composite current collector. As an example, an aluminum foil may be used as the metal foil. The composite current collector may include a polymer material substrate and a metal material layer formed on at least one surface of the polymer material substrate. As an example, the metal material may be at least one selected from aluminum, an aluminum alloy, nickel, a nickel alloy, titanium, a titanium alloy, silver, and a silver alloy. As an example, the polymer material substrate may be selected from polypropylene (PP), polyethylene terephthalate (PET), polybutylene terephthalate (PBT), polystyrene (PS), polyethylene (PE), and the like.

The positive film layer is generally formed by coating the positive current collector with a positive slurry and then performing drying and cold calendering. The positive slurry is generally formed by dispersing a positive active material, an optional conductive agent, an optional binder, and any other ingredients into a solvent and then stirring well. The solvent may be, but without being limited to, N-methyl-pyrrolidone (NMP).

The positive electrode plate does not exclude other additional functional layers different from the positive film layer. For example, in some embodiments, the positive electrode plate according to this application further includes a conductive undercoat (for example, formed of a conductive agent and a binder) disposed on a surface of the positive current collector and sandwiched between the positive current collector and the positive film layer. In other embodiments, the positive electrode plate according to this application further includes a protection layer that overlays the surface of the positive film layer.

### Sodium-ion battery

A fourth aspect of this application provides a sodium-ion battery. The sodium-ion battery includes a positive electrode plate, a negative electrode plate, and an electrolyte. In a charge-and-discharge cycle of the sodium-ion battery, sodium ions are shuttled between the positive electrode plate and the negative electrode plate by intercalation and deintercalation. The electrolyte serves to conduct the sodium ions between the positive electrode plate and the negative electrode plate. The sodium-ion battery according to this application is applicable to energy storage power systems such as hydro, thermal, wind, and solar power stations, and to many other fields such as electric tools, electric bicycles, electric motorcycles, and electric vehicles, military equipment, and aerospace.

### [Positive electrode plate]

The positive electrode plate used in the sodium-ion battery according to this application is the positive electrode plate according to any embodiment of the third aspect of this application.

### [Negative electrode plate]

In some embodiments, the negative electrode plate may be a metal sodium plate.

In some embodiments, the negative electrode plate may include a negative current collector and a negative film layer disposed on at least one surface of the negative current collector and containing a negative active material. For example, the negative current collector includes two surfaces opposite to each other in a thickness direction of the negative current collector. The negative film layer is disposed on either or both of the two opposite surfaces of the negative current collector.

The negative active material may be a negative active material well-known for use in a sodium-ion battery in the art. As an example, the negative active material includes, but is not limited to, at least one of natural graphite, artificial graphite, soft carbon, hard carbon, or mesocarbon microbeads. This application is not limited to such materials, and other conventional well-known materials suitable for use as a negative active material of a sodium-ion battery may be used instead. One of the negative active materials may be used alone, or at least two thereof may be used in combination.

In some embodiments, the negative film layer further optionally includes a negative conductive agent. The type of the negative conductive agent is not particularly limited in this application. As an example, the negative conductive agent may include at least one of superconductive carbon, conductive graphite, acetylene black, carbon black, Ketjen black, carbon dots, carbon nanotubes, graphene, or carbon nanofibers.

In some embodiments, the negative film layer further optionally includes a negative binder. The type of the negative binder is not particularly limited in this application. As an example, the negative binder may include at least one of styrene-butadiene rubber (SBR), water-soluble unsaturated resin SR-1B, aqueous acrylic resin (such as polyacrylic acid PAA, polymethacrylic acid PMAA, or polyacrylic acid sodium PAAS), polyacrylamide (PAM), polyvinyl alcohol (PVA), sodium alginate (SA), or carboxymethyl chitosan (CMCS).

In some embodiments, the negative film layer further optionally includes other agents. As an example, the other agents may include a thickener, for example, sodium carboxymethyl cellulose (CMC-Na), a PTC thermistor material, or the like.

In some embodiments, the negative current collector may be a metal foil or a composite current collector. As an example of the metal foil, the negative current collector may be a copper foil. The composite current collector may include a polymer material substrate and a metal material layer formed on at least one surface of the polymer material substrate. As an example, the metal material may be at least one selected from copper, a copper alloy, nickel, a nickel alloy, titanium, a titanium alloy, silver, and a silver alloy. As an example, the polymer material substrate may be selected from polypropylene (PP), polyethylene terephthalate (PET), polybutylene terephthalate (PBT), polystyrene (PS), polyethylene (PE), and the like.

The negative film layer is generally formed by coating the negative current collector with a negative slurry and then performing drying and cold calendering. The negative slurry is generally formed by dispersing a negative active material, an optional conductive agent, an optional binder, and other optional agents into a solvent and then stirring well. The solvent may be, but without being limited to, N-methyl-pyrrolidone (NMP) or deionized water.

The negative electrode plate does not exclude other additional functional layers different from the negative film layer. For example, in some embodiments, the negative electrode plate according to this application further includes a conductive undercoat (for example, formed of a conductive agent and a binder) disposed on a surface of the negative current collector and sandwiched between the negative current collector and the negative film layer. In other embodiments, the negative electrode plate according to this application further includes a protection layer that overlays the surface of the negative film layer.

### [Electrolyte]

The type of the electrolyte is not particularly limited in this application, and may be selected as required. For example, the electrolyte may be at least one selected from a solid-state electrolyte and a liquid-state electrolyte (that is, electrolytic solution).

In some embodiments, the electrolyte is an electrolytic solution. The electrolytic solution includes an electrolyte salt and a solvent.

The type of the electrolyte salt is not particularly limited, and may be selected as actually required. In some embodiments, as an example, the electrolyte salt may include at least one of NaPF₆, NaClO₄, NaBCl₄, NaSO₃CF₃, or Na(CH₃)C₆H₄SO₃.

The type of the solvent is not particularly limited, and may be selected as actually required. In some embodiments, as an example, the solvent may include at least one of ethylene carbonate (EC), propylene carbonate (PC), ethyl methyl carbonate (EMC), diethyl carbonate (DEC), dimethyl carbonate (DMC), dipropyl carbonate (DPC), methyl propyl carbonate (MPC), ethylene propyl carbonate (EPC), butylene carbonate (BC), fluoroethylene carbonate (FEC), methyl formate (MF), methyl acetate (MA), ethyl acetate (EA), propyl acetate (PA), methyl propionate (MP), ethyl propionate (EP), propyl propionate (PP), methyl butyrate (MB), ethyl butyrate (EB), 1,4-butyrolactone (GBL), sulfolane (SF), methyl sulfonyl methane (MSM), ethyl methyl sulfone (EMS), or (ethylsulfonyl)ethane (ESE).

In some embodiments, the electrolytic solution further optionally includes an additive. For example, the additive may include a negative film-forming additive, a positive film-forming additive, and additives that can improve some performance of the battery, for example, an additive that improves overcharge performance of the battery, an additive that improves high-temperature performance of the battery, and an additive that improves low-temperature power performance of the battery, and the like.

### [Separator]

A sodium-ion battery that employs an electrolytic solution and some sodium-ion batteries that employ a solid-state electrolyte further contain a separator. Disposed between the positive electrode plate and the negative electrode plate, the separator primarily serves to prevent a short circuit between the positive electrode plate and the negative electrode plate, and is penetrable by sodium ions. The type of the separator is not particularly limited in this application, and may be any well-known porous separator that is highly stable both chemically and mechanically.

In some embodiments, the separator may be made of a material that includes at least one of glass fiber, non-woven fabric, polyethylene, polypropylene, or polyvinylidene difluoride. The separator may be a single-layer film or a multilayer composite film. When the separator is a multilayer composite film, materials of different layers may be identical or different.

In some embodiments, the positive electrode plate, the separator, and the negative electrode plate may be made into an electrode assembly by winding or stacking.

In some embodiments, the sodium-ion battery may include an outer package. The outer package may be configured to package the electrode assembly and the electrolyte.

In some embodiments, the outer package of the sodium-ion battery may be a hard shell such as a hard plastic shell, an aluminum shell, a steel shell, or the like. Alternatively, the outer package of the sodium-ion battery may be a soft package such as a pouch-type soft package. The material of the soft package may be plastic such as at least one of polypropylene (PP), polybutylene terephthalate (PBT), or polybutylene succinate (PBS).

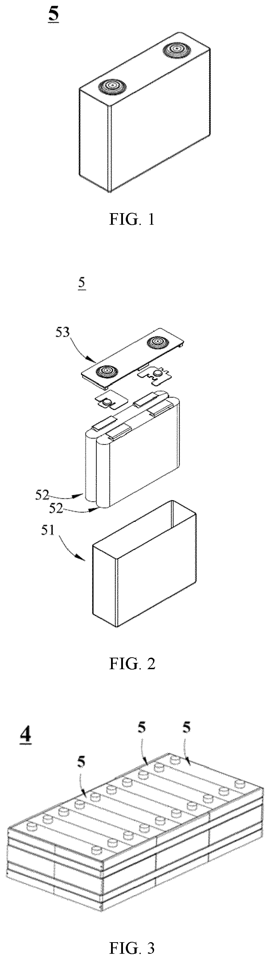

The shape of the sodium-ion battery is not particularly limited in this application, and may be cylindrical, prismatic or any other shape. FIG. 1 shows a prismatic sodium-ion battery 5 as an example.

In some embodiments, as shown in FIG. 2, the outer package may include a housing 51 and a cover plate 53. The housing 51 may include a bottom plate and a side plate connected to the bottom plate. The bottom plate and the side plate close in to form an accommodation cavity. The housing 51 is equipped with an opening that communicates with the accommodation cavity. The cover plate 53 is configured to fit and cover the opening to close the accommodation cavity. The positive electrode plate, the negative electrode plate, and the separator may be made into the electrode assembly 52 by winding or stacking. The electrode assembly 52 is packaged in the accommodation cavity. The electrolytic solution infiltrates in the electrode assembly 52. The number of electrode assemblies 52 in the sodium-ion battery 5 may be one or more, and is adjustable as required.

The method for preparing the sodium-ion battery in this application is well-known. In some embodiments, the positive electrode plate, the separator, the negative electrode plate, and the electrolytic solution may be assembled to form a sodium-ion battery. An example of the method for preparing the secondary battery is: assembling the positive electrode plate, the separator, and the negative electrode plate to form an electrode assembly by winding or stacking, placing the electrode assembly into an outer package, performing drying and then injecting an electrolytic solution, and performing steps such as vacuum sealing, standing, chemical formation, and shaping to obtain a sodium-ion battery.

In some embodiments, the sodium-ion batteries according to this application may be assembled into a battery module. The number of the sodium-ion batteries contained in a battery module may be plural, and may be adjusted according to practical applications and capacity of the battery module.

FIG. 3 is a schematic diagram of a battery module 4 as an example. As shown in FIG. 3, in the battery module 4, a plurality of sodium-ion batteries 5 may be arranged sequentially along a length direction of the battery module 4. Alternatively, the secondary batteries may be arranged in any other manner. Further, the plurality of sodium-ion batteries 5 may be fixed by a fastener.

Optionally, the battery module 4 may further include a shell that provides an accommodation space. The plurality of sodium-ion batteries 5 are accommodated in the accommodation space.

In some embodiments, the battery module may be assembled to form a battery pack. The number of the battery modules contained in a battery pack may be adjusted according to practical applications and the capacity of the battery pack.

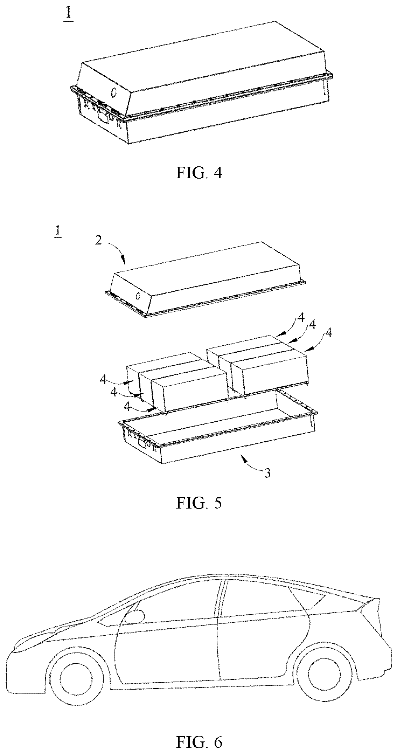

FIG. 4 and FIG. 5 are schematic diagrams of a battery pack 1 as an example. As shown in FIG. 4 and FIG. 5, the battery pack 1 may contain a battery box and a plurality of battery modules 4 disposed in the battery box. The battery box includes an upper box 2 and a lower box 3. The upper box 2 is configured to fit and cover the lower box 3 to form a closed space for accommodating the battery modules 4. The plurality of battery modules 4 may be arranged in the battery box in any manner.

### Electrical device

A fifth aspect of this application provides an electrical device. The electrical device includes at least one of the sodium-ion battery according to this application, the battery module or the battery pack assembled by using the sodium-ion battery. The sodium-ion battery, the battery module, or the battery pack may be used as a power supply of the electrical device, or used as an energy storage unit of the electrical device. The electrical device may be, but without being limited to, a mobile device (such as a mobile phone or a laptop computer), an electric vehicle (such as a battery electric vehicle, a hybrid electric vehicle, a plug-in hybrid electric vehicle, an electric bicycle, an electric scooter, an electric golf cart, or an electric truck), an electric train, a ship, a satellite system, or an energy storage system.

The sodium-ion battery, or the battery module or battery pack assembled by using the sodium-ion battery may be selected for use in the electrical device according to practical requirements.

FIG. 6 is a schematic diagram of an electrical device as an example. The electrical device may be a battery electric vehicle, a hybrid electric vehicle, a plug-in hybrid electric vehicle, or the like. A battery pack or a battery module may be employed to meet the requirements of the electrical device for a high power and a high energy density.

In another example, the electrical device may be a mobile phone, a tablet computer, a notebook computer, or the like. The electrical device is generally required to be thin and light, and may use a sodium-ion battery as a power supply.

### Embodiments

The following embodiments are more detailed descriptions of the subject-matter disclosed herein. The embodiments are merely intended as illustrative descriptions because, evidently, a person skilled in the art may make various modifications and changes to such embodiments without departing from what is disclosed herein. Unless otherwise specified, all fractions, percentages, and ratios mentioned in the following embodiments are values by mass. All reagents used in the embodiments are commercially available or can be synthesized according to conventional methods, and can be directly put into use without a need of further processing. All the instruments used in the embodiments are commercially available.

### Comparative Embodiment 1

Blending sodium carbonate, CuO, Fe₂O₃, and MnCO₃ at a mixing ratio, and stirring the mixture well by using a ball mill. Putting the ball-milled mixture into a muffle furnace, sintering the mixture at 800 °C for 15 hours in an air atmosphere, and cooling the mixture down to a room temperature naturally to obtain a layered transition metal oxide Na_{0.9}Cu_{0.20}Fe_{0.25}Mn_{0.55}O₂.

### Comparative Embodiment 2

Adding 10 grams of the layered transition metal oxide prepared in Comparative Embodiment 1 into 13-ml deionized water. Stirring magnetically for 2 minutes at a stirring speed of 400 rpm, during which the reaction temperature T1 is controlled to be 25 °C. After completion of the reaction, leaching the resultant solution by using a vacuum filter. Subsequently, Putting a solid composition resultant from the leaching into a 150 °C vacuum oven and drying the solid composition for 15 hours. Grinding the dried product to obtain a layered transition metal oxide of Comparative Embodiment 2.

### Comparative Embodiment 3

Formulating a boric acid aqueous solution with a pH value of 6.0. Adding 10 grams of the layered transition metal oxide prepared in Comparative Embodiment 1 into a 13-gram boric acid aqueous solution. Stirring magnetically for 3 minutes at a stirring speed of 400 rpm, during which the reaction temperature T1 is controlled to be 25 °C. After completion of the reaction, leaching the resultant solution by using a vacuum filter. Subsequently, Putting a solid composition resultant from the leaching into a 150 °C vacuum oven and drying the solid composition for 15 hours. Grinding the dried product to obtain a layered transition metal oxide of Comparative Embodiment 3.

### Embodiments 1 to 24

The method for preparing a layered transition metal oxide is similar to that in Comparative Embodiment 3 except specific parameters applied in the washing process, as detailed in Table 1.

**Table 1**

| Serial number | Washing solution | | T1 | Stirring speed | Stirring time | Drying temperature | Drying time |
|---|---|---|---|---|---|---|---|
| | Type | pH | (°C) | (rpm) | (min) | (°C) | (h) |
| Embodiment 1 | Boric acid aqueous solution | 6.0 | 10 | 400 | 2 | 150 | 15 |
| Embodiment 2 | Boric acid aqueous solution | 4.0 | 10 | 400 | 2 | 150 | 15 |
| Embodiment 3 | Boric acid aqueous solution | 5.0 | 10 | 400 | 2 | 150 | 15 |
| Embodiment 4 | Boric acid aqueous solution | 6.5 | 10 | 400 | 2 | 150 | 15 |
| Embodiment 5 | Deionized water | 7.0 | 10 | 400 | 2 | 150 | 15 |
| Embodiment 6 | Boric acid aqueous solution | 6.0 | 3 | 400 | 2 | 150 | 15 |
| Embodiment 7 | Boric acid aqueous solution | 6.0 | 5 | 400 | 2 | 150 | 15 |
| Embodiment 8 | Boric acid aqueous solution | 6.0 | 15 | 400 | 2 | 150 | 15 |
| Embodiment 9 | Boric acid aqueous solution | 6.0 | 10 | 100 | 2 | 150 | 15 |
| Embodiment 10 | Boric acid aqueous solution | 6.0 | 10 | 300 | 2 | 150 | 15 |
| Embodiment 11 | Boric acid aqueous solution | 6.0 | 10 | 500 | 2 | 150 | 15 |
| Embodiment 12 | Boric acid aqueous solution | 6.0 | 10 | 1000 | 2 | 150 | 15 |
| Embodiment 13 | Boric acid aqueous solution | 6.0 | 10 | 400 | 1 | 150 | 15 |
| Embodiment 14 | Boric acid aqueous solution | 6.0 | 10 | 400 | 3 | 150 | 15 |
| Embodiment 15 | Boric acid aqueous solution | 6.0 | 10 | 400 | 5 | 150 | 15 |
| Embodiment 16 | Boric acid aqueous solution | 6.0 | 10 | 400 | 10 | 150 | 15 |
| Embodiment 17 | Boric acid aqueous solution | 6.0 | 10 | 400 | 2 | 80 | 15 |
| Embodiment 18 | Boric acid aqueous solution | 6.0 | 10 | 400 | 2 | 120 | 15 |
| Embodiment 19 | Boric acid aqueous solution | 6.0 | 10 | 400 | 2 | 180 | 15 |
| Embodiment 20 | Boric acid aqueous solution | 6.0 | 10 | 400 | 2 | 200 | 15 |
| Embodiment 21 | Boric acid aqueous solution | 6.0 | 10 | 400 | 2 | 150 | 5 |
| Embodiment 22 | Boric acid aqueous solution | 6.0 | 10 | 400 | 2 | 150 | 10 |
| Embodiment 23 | Boric acid aqueous solution | 6.0 | 10 | 400 | 2 | 150 | 18 |
| Embodiment 24 | Boric acid aqueous solution | 6.0 | 10 | 400 | 2 | 150 | 24 |
| Comparative Embodiment 1 | / | / | / | / | / | / | / |
| Comparative Embodiment 2 | Deionized water | 7.0 | 25 | 400 | 2 | 150 | 15 |
| Comparative Embodiment 3 | Boric acid aqueous solution | 6.0 | 25 | 400 | 2 | 150 | 15 |

### Performance Test

### (1) X-ray diffraction spectrometry of layered transition metal oxide

The layered transition metal oxide prepared in each embodiment and comparative embodiment is analyzed by using an X-ray powder diffractometer. Specifically, the specimen is tested by using a Brucker D8A_A25 X-ray powder diffractometer manufactured by Brucker AxS, Germany, where a CuKα ray is used as a radiation source, a ray wavelength λ is equal to 1.5406 Å, a scanning 2θ angle is 15 ° to 70 °, and the scanning speed is 4°/min.

### (2) Capacity test of the layered transition metal oxide

Assembling the layered transition metal oxide prepared in each embodiment and comparative embodiment into a button battery at 25 °C, and then charging the battery at a constant current density of 10 mA/g until the voltage reaches 4.3 V to obtain a first-cycle charge capacity of the button battery. Subsequently, discharging the battery at a constant current density of 10 mA/g until the voltage reaches 1.5 V to obtain a first-cycle discharge capacity of the button battery.

The first-cycle specific charge capacity of the layered transition metal oxide (mAh/g) is equal to the first-cycle charge capacity of the button battery divided by the mass of the layered transition metal oxide.

The first-cycle specific discharge capacity of the layered transition metal oxide (mAh/g) is equal to the first-cycle discharge capacity of the button battery divided by the mass of the layered transition metal oxide.

The foregoing button battery is prepared according to the processes described below:

Process of preparing a positive electrode plate: Mixing well the layered transition metal oxide, carbon black (Super P) as a conductive agent, and polyvinylidene difluoride (PVDF) as a binder at a mass ratio of 80: 15: 5 in an appropriate amount of N-methyl-pyrrolidone (NMP) solvent to form a homogeneous positive slurry. Coating the surface of a positive current collector aluminum foil with the positive slurry evenly, drying and cold-calendering the aluminum foil, and stamping the aluminum foil into discs with a 14-mm diameter to obtain a positive electrode plate.

Negative electrode plate: Using a metal sodium plate as the negative electrode plate.

Process of preparing an electrolytic solution: Mixing ethylene carbonate (EC) and diethyl carbonate (DEC) at a fifty-fifty volume ratio to obtain an organic solvent, and then dissolving a NaClO₄ salt in the organic solvent to make an electrolytic solution in which the concentration of the salt is 1 mol/L.

Separator: Using a porous polyethylene film as a separator.

Process of preparing a button battery: Stacking the positive electrode plate, the separator, and the negative electrode plate sequentially so that the separator is located between the positive electrode plate and the negative electrode plate to serve a separation function, and adding the prepared electrolytic solution to complete preparing a button battery.

Table 2 shows test results of Embodiments 1 to 24 and Comparative Embodiments 1 to 3.

**Table 2**

| Serial number | First-cycle charge capacity per gram (mAh/g) | First-cycle discharge capacity per gram (mAh/g) | V(003) | I₍₁₀₄₎/I₍₀₁₅₎ | I₍₁₀₁₎/I₍₀₁₂₎ |
|---|---|---|---|---|---|
| Embodiment 1 | 137.2 | 224.4 | 0.09° | 16.8 | 1.10 |
| Embodiment 2 | 117.0 | 190.0 | 0.12° | 13.5 | 1.02 |
| Embodiment 3 | 124.0 | 198.0 | 0.12° | 14.6 | 1.05 |
| Embodiment 4 | 126.0 | 212.0 | 0.17° | 15.3 | 1.05 |
| Embodiment 5 | 119.0 | 199.7 | 0.19° | 12.1 | 1.04 |
| Embodiment 6 | 136.5 | 223.3 | 0.10° | 16.1 | 1.09 |
| Embodiment 7 | 134.3 | 222.4 | 0.10° | 16.4 | 1.09 |
| Embodiment 8 | 131.7 | 220.7 | 0.16° | 15.7 | 1.05 |
| Embodiment 9 | 122.4 | 208.0 | 0.16° | 13.9 | 1.00 |
| Embodiment 10 | 127.0 | 221.4 | 0.11° | 15.4 | 1.06 |
| Embodiment 11 | 131.6 | 223.5 | 0.11° | 15.8 | 1.05 |
| Embodiment 12 | 120.2 | 195.0 | 0.18° | 12.7 | 1.00 |
| Embodiment 13 | 120.1 | 209.3 | 0.16° | 14.0 | 1.04 |
| Embodiment 14 | 128.5 | 216.6 | 0.15° | 15.7 | 1.03 |
| Embodiment 15 | 121.3 | 207.4 | 0.17° | 12.6 | 1.04 |
| Embodiment 16 | 117.4 | 200.0 | 0.20° | 12.9 | 1.00 |
| Embodiment 17 | 119.0 | 197.4 | 0.18° | 13.1 | 1.02 |
| Embodiment 18 | 128.0 | 217.1 | 0.16° | 14.2 | 1.04 |
| Embodiment 19 | 137.2 | 223.8 | 0.10° | 16.5 | 1.08 |
| Embodiment 20 | 137.0 | 224.8 | 0.10° | 16.7 | 1.09 |
| Embodiment 21 | 117.0 | 210.2 | 0.17° | 14.0 | 1.02 |
| Embodiment 22 | 124.7 | 216.5 | 0.15° | 14.8 | 1.06 |
| Embodiment 23 | 136.8 | 222.5 | 0.11° | 16.7 | 1.10 |
| Embodiment 24 | 137.0 | 223.5 | 0.09° | 16.5 | 1.10 |
| Comparative Embodiment 1 | 131.0 | 139.8 | / | 17.0 | 1.10 |
| Comparative Embodiment 2 | 109.0 | 170.0 | 0.40° | 0.15 | 0.55 |
| Comparative Embodiment 3 | 115.3 | 178.5 | 0.39° | 1.06 | 0.73 |

As can be seen from the test results in Table 2, after the layered transition metal oxide is washed by using deionized water or an acidic solution (4.0 ≤ pH < 7.0) in a low-temperature environment of less than 20 °C, the resultant layered transition metal oxide is significantly improved in terms of both the first-cycle charge capacity per gram and the first-cycle discharge capacity per gram. In addition, the crystal structure of the layered transition metal oxide hardly changes after being washed.

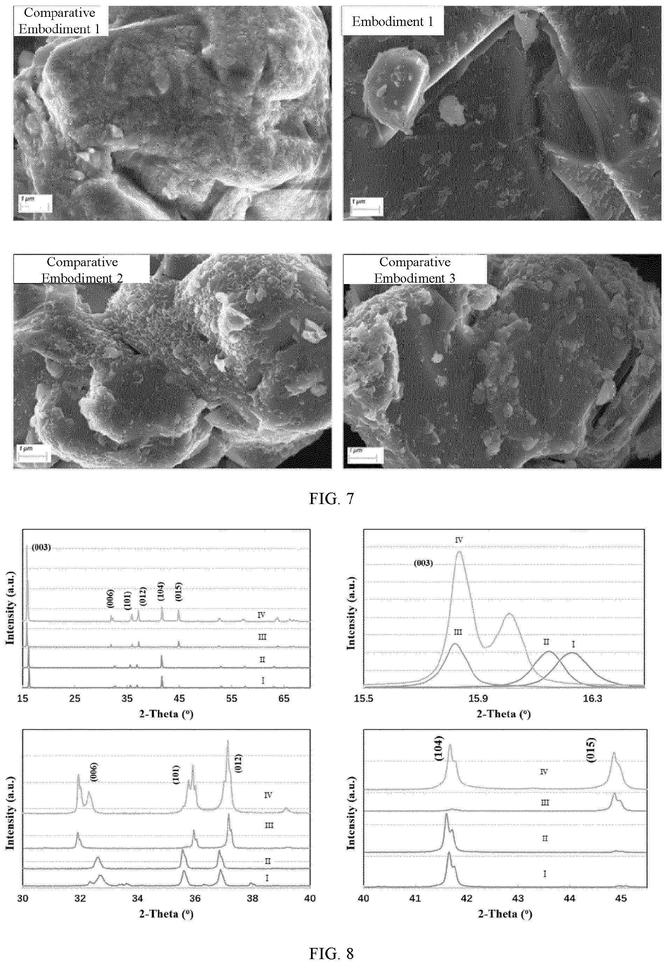

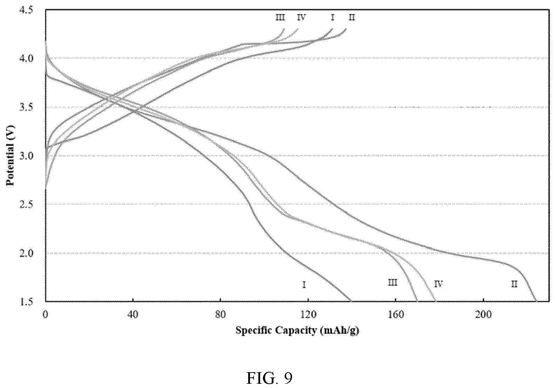

FIG. 7 is a scanning electron microscope (SEM) image of a layered transition metal oxide prepared in Comparative Embodiments 1 to 3 and Embodiment 1; FIG. 8 is an X-ray diffraction (XRD) pattern of a layered transition metal oxide prepared in Comparative Embodiments 1 to 3 and Embodiment 1; and FIG. 9 is a charge-discharge curve of a layered transition metal oxide prepared in Comparative Embodiments 1 to 3 and Embodiment 1. In FIG. 8 and FIG. 9, I represents Comparative Embodiment 1, II represents Embodiment 1, III represents Comparative Embodiment 2, and IV represents Comparative Embodiment 3.

As can be seen from FIG. 7 to FIG. 9, by virtue of a washing process that employs a low temperature and an acidic solution according to this application, the layered transition metal oxide obtained in Embodiment 1 exhibits a cleaner surface, less residual alkali, no significant damage, and few changes in the crystal structure. In contrast to Comparative Embodiment 1, both the first-cycle charge capacity per gram and the first-cycle discharge capacity per gram in Embodiment 1 are improved significantly.

The layered transition metal oxide obtained in Comparative Embodiment 2 by a washing process that employs a normal temperature and deionized water exhibits a relatively large amount of residual alkali on the surface. After washing, the (003) characteristic peak is offset toward a low angle by a relatively large amount, and the intensities of the (012) characteristic peak and the (105) characteristic peak increase significantly, indicating that some sodium ions in the crystal structure are dissolved out during the washing, the crystal structure is severely damaged, and the crystal plane has slipped. In contrast to Comparative Embodiment 1, the first-cycle charge capacity per gram in Comparative Embodiment 2 declines significantly.

The layered transition metal oxide obtained in Comparative Embodiment 3 by a washing process that employs a normal temperature and an acidic solution exhibits still a relatively large amount of residual alkali on the surface. Similar to Comparative Embodiment 2, after washing, the (003) characteristic peak is offset toward a low angle by a relatively large amount, and the intensities of the (012) characteristic peak and the (105) characteristic peak increase significantly, indicating that some sodium ions in the crystal structure are also dissolved out during the washing, the crystal structure is severely damaged, and the crystal plane has slipped. In contrast to Comparative Embodiment 1, the first-cycle charge capacity per gram also declines significantly.

As can be seen from the test results of Embodiments 1 to 5, when the acidity of the washing solution is relatively high, the first-cycle charge capacity per gram and the first-cycle discharge capacity per gram of the resultant layered transition metal oxide decline slightly. Therefore, the pH value of the acidic solution is recommended to be not lower than 4.0.

Further, as can be seen from the test results of Embodiments 1 to 5, in terms of the first-cycle charge capacity per gram and the first-cycle discharge capacity per gram, the layered transition metal oxide washed with an acidic solution of an appropriate pH value outperforms the layered transition metal oxide washed with deionized water. A possible reason is that the acidic solution washes the layered transition metal oxide primarily based on an acid-base neutralization reaction principle. Therefore, under the same washing conditions, the layered transition metal oxide washed with the acidic solution leaves less residual alkali on the surface, and causes less damage to the crystal structure in the washing process. In addition, the acidic solution reacts with the residual alkali to form a sodium salt of relatively high thermal stability. Therefore, the sodium salt that remains on the surface of the resultant layered transition metal oxide after completion of the drying can function as a coating layer to some extent, thereby reducing surface side reactions and improving structural stability and thermal stability of the material. Therefore, the layered transition metal oxide washed with an acidic solution of an appropriate pH value can be improved in terms of the first-cycle charge capacity per gram and the first-cycle discharge capacity per gram.

It is hereby noted that this application is not limited to the foregoing embodiments. The foregoing embodiments are merely examples. Any and all embodiments with substantively the same composition or exerting the same effects as the technical ideas hereof without departing from the scope of the technical solutions of this application still fall within the technical scope of this application. In addition, all kinds of variations of the embodiments conceivable by a person skilled in the art and any other embodiments derived by combining some constituents of the embodiments hereof without departing from the subject-matter of this application still fall within the scope of this application.

## Claims

1. A method for preparing a positive active material for use in a sodium-ion battery, comprising the following steps:
mixing a positive active material for use in a sodium-ion battery with, and causing the positive active material to react with, a washing solution at a temperature of T1, and filtering and drying a product of the reaction to obtain a washed positive active material for use in a sodium-ion battery, wherein
the washing solution is deionized water or an acidic solution with a pH value lower than 7.0, and 0 °C ≤ T1 < 20 °C.

2. The method according to claim 1, wherein 2 °C ≤ T1 ≤ 15 °C, and optionally, 5 °C ≤ T1 ≤ 10 °C.

3. The method according to claim 1 or 2, wherein the pH value of the acidic solution satisfies 4.0 ≤ pH < 7.0, and optionally, 5.0 ≤ pH ≤ 6.5.

4. The method according to any one of claims 1 to 3, wherein
the acidic solution comprises deionized water and a solute; and
optionally, the solute comprises at least one of boric acid, acetic acid, metasilicic acid, alpha hydroxy acid, phosphoric acid, diammonium hydrogen phosphate, disodium hydrogen phosphate, sodium hydrogen sulfate, or ammonium chloride.

5. The method according to any one of claims 1 to 4, wherein
a drying temperature is 90 °C to 200 °C, and optionally 120 °C to 180 °C; and/or
a drying time is 4 h to 24 h, and optionally 10 h to 18 h.

6. The method according to any one of claims 1 to 5, wherein the positive active material for use in a sodium-ion battery and the washing solution are mixed and react in a stirring state.

7. The method according to claim 6, wherein
a stirring speed is 100 rpm to 1000 rpm, and optionally 300 rpm to 500 rpm; and/or
a stirring time is 0.5 min to 30 min, and optionally 1 min to 5 min.

8. The method according to any one of claims 1 to 7, wherein
the positive active material for use in a sodium-ion battery is a layered transition metal oxide; and
optionally, a molecular formula of the layered transition metal oxide is NaₓM1_{y}M2_{1-y}O_{2-δ}Q_{z}, wherein M1 is at least one selected from Ni, Mn, Fe, Co, or Cu, M2 is at least one selected from Li, Mg, Al, Si, K, Ca, Sc, Ti, V, Cr, Zn, Sr, Y, Zr, Nb, Mo, Bi, or La, Q is at least one selected from F, Cl, or N, 0 < x ≤ 1, 0 < y ≤ 1, 0 ≤ z ≤ 0.3, and 0 ≤ δ ≤ 0.3.

9. A positive active material for use in a sodium-ion battery, wherein the positive active material is prepared by using the method according to any one of claims 1 to 8.

10. A positive electrode plate, comprising the positive active material for use in a sodium-ion battery according to claim 9.

11. A sodium-ion battery, comprising the positive electrode plate according to claim 10.

12. An electrical device, comprising at least one of the sodium-ion battery according to claim 11, or a battery module or a battery pack assembled by using the sodium-ion battery according to claim 11, wherein the sodium-ion battery, the battery module, or the battery pack is used as a power supply or an energy storage unit of the electrical device.
